# EUROPEAN PATENT APPLICATION

(11) **EP 2 840 817 A1**
(43) Date of publication of application: **25.02.2015**
(21) Application number: 13360024.7
(22) Date of filing: 19.08.2013
(51) Int. Cl.: H04W 8/26

(54) **Telecommunication method, system, gateway access controller and computer program product**

(71) Applicant: ALCATEL LUCENT, 92100 Boulogne-Billancourt (FR)
(72) Inventor: Brend, Graham, Swindon, Wiltshire SN5 7DJ (GB); Godin, Philippe, 91620 Nozay (FR); Warner, George Martin, Swindon, Wiltshire SN5 7DJ (GB)
(74) Representative: Greenwood, Matthew David

(57) **Abstract**

A method, in a cellular radio-communication system comprising a core network and an access network, the access network including a home gateway access controller for serving nodes of a first type supporting a mobility process and nodes of a second type that do not support the mobility process for UE of the system, the method comprising receiving, at the home gateway access controller, a registration request from a node to register with the home gateway access controller, determining, at the home gateway access controller, whether the content of the registration request includes an indication that the node supports the mobility process, on the basis of the determination, allocating an identifier to the node for the access network representing whether the node can operate under the mobility process or not.

## Description

### TECHNICAL FIELD

The present invention relates to a method, in a radio communication system comprising a user equipment in dual connection with a primary node and a secondary node, a telecommunications system, a primary node, a secondary node and to a user equipment.

### BACKGROUND

Small Cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, often referred to as femto-, pico- or metro cells, typically use a customer's broadband internet connection, for example DSL, cable or the like, as backhaul towards the macrocellular network. Support of non-ideal backhaul (with one way latency of few milliseconds to few tens of milliseconds) between small cells and between small cell and macro cells is considered as the typical deployment scenario.

Small cell deployment for handling capacity needs in high traffic areas, such as hot spot areas, is an area of investigation. A proposal for handling capacity needs in high traffic areas is to provide dual connectivity support for user equipment. Dual connectivity support allows a User Equipment (UE) to be concurrently connected to a macro cell and a small cell, or to two small cells or to two macro cells for example. A UE can thus be connected to and served by more than one cell at a time. Dual connectivity support is considered as a way to enable offloading of traffic when required.

A key issue for operators is the ability to provide the end user with a seamless service as they move around the deployed network, e.g. from a macro cell to a femtocell, or between femtocells for example. Therefore support of mobility events within a network that has deployed femtocells is important.

### SUMMARY

According to an example, there is provided a method, in a cellular radio-communication system comprising a core network and an access network, the access network including a home gateway access controller for serving nodes of a first type supporting a mobility process and nodes of a second type that do not support the mobility process for UE of the system, the method comprising receiving, at the home gateway access controller, a registration request from a node to register with the home gateway access controller, determining, at the home gateway access controller, whether the content of the registration request includes an indication that the node supports the mobility process, on the basis of the determination, allocating an identifier to the node for the access network representing whether the node can operate under the mobility process or not. The UE can be operable to perform a node reselection procedure to connect with a target node of the access network from a host node, including determining, at the home gateway access controller using the identifier, whether the host node supports the mobility process. Context data can be provided for the UE from the host node to the target node on the basis of the determination of the mobility process supported by the host node. Using the identifier can include determining an RNC identification for the host node using a URNTI allocated to the UE. The UE's connection with the target node can be released, and a new RRC connection with the target node can be established, including allocating a new URNTI to the UE.

According to an example, there is provided a radio telecommunication system comprising a core network, an access network including a home gateway access controller (53) to serve nodes of a first type supporting a mobility process and nodes of a second type that do not support the mobility process for UE of the system, the system operable to receive, at the home gateway access controller, a registration request from a node to register with the home gateway access controller, determine, at the home gateway access controller, whether the content of the registration request includes an indication that the node supports the mobility process, on the basis of the determination, allocate an identifier to the node for the access network representing whether the node can operate under the mobility process or not. The UE can be operable to perform a node reselection procedure to connect with a target node of the access network from a host node, the home gateway access controller operable to determine using the identifier, whether the host node supports the mobility process. The host node can be operable to provide context data for the UE to the target node on the basis of the determination of the mobility process supported by the host node. The system can be operable to determine an RNC identification for the host node using a URNTI allocated to the UE. The UE's connection with the target node can be released, a new RRC connection with the target node can be established, and a new URNTI allocated to the UE.

According to an example, there is provided a home gateway access controller of a heterogeneous telecommunications system operable to receive a registration request from a node of the system to register with the home gateway access controller, determine whether the content of the registration request includes an indication that the node supports a predefined mobility process, and allocate, on the basis of the determination, an identifier to the node representing whether the node can operate under the mobility process or not. According to an example, there is provided a home gateway access controller of a heterogeneous telecommunications system configured as a large RNC. The home gateway access controller can be configured to support more than one RNC-ID.

According to an example, there is provided a UE operable in accordance with the method as provided above. According to an example, there is provided a computer program product, comprising a computer usable medium having computer readable program code embodied therein, said computer readable program code adapted to be executed to implement a method, in a radio communication system, as provided above.

### BRIEF DESCRIPTION OF THE FIGURES

Embodiments will now be described, by way of example only, with reference to the accompanying drawings, in which:
Figure 1 is a schematic representation of a heterogeneous telecommunications system according to an example;
Figure 2 is a schematic representation of a process according to an example, in which two HNBs are deployed, one supporting a mobility feature and one not supporting the mobility feature; and
Figure 3 is a schematic representation of a process according to an example, in which two HNBs are deployed, neither supporting a mobility feature.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

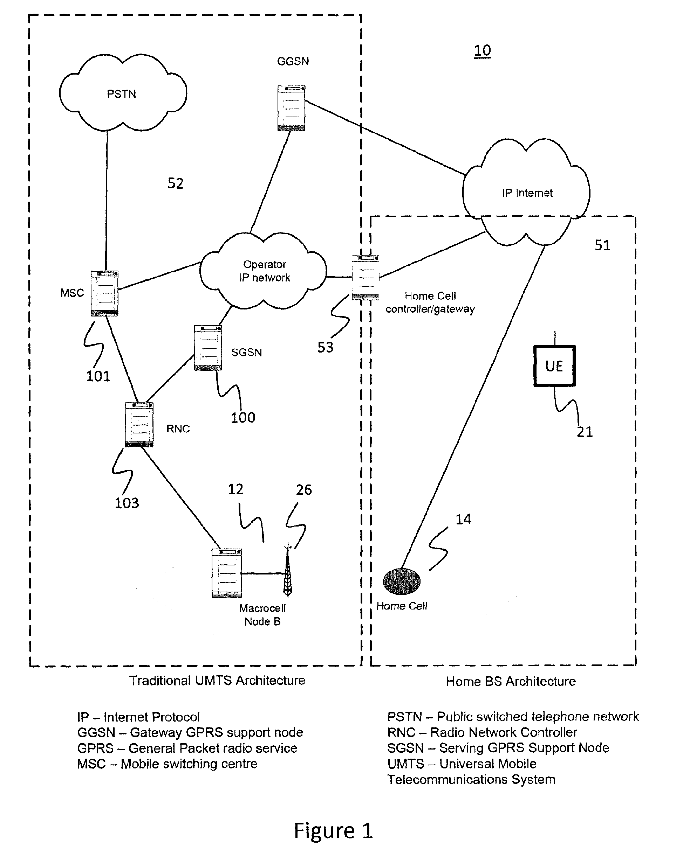

Figure 1 is a schematic representation of a heterogeneous telecommunications system 10 comprising a macro cell 12 and a small cell 14 (also referred to as a small-, femto- or home- cell or node) according to an example. Cell 12 and small cell 14 are both served by the Core Network (SGSN 100 and MSC 101) but there may also be a direct connection between the macro RNC 103 and the Home Cell Controller/Gateway (HNB-GW) 53 (not via SGSN) to support mobility between the macro and small cells.
Small cells can be distributed geographically to provide an area of coverage within or outside of the macro cell 12. UE 21 may roam through the network 10. When the user equipment is located within the macro cell 12, communications may be established between the user equipment and the macro cell base station 26 over an associated radio link. If the user equipment is located geographically within the small cell 14, communications may be established between the user equipment and the base station of the small cell over an associated radio link. It will be appreciated that Figure 1 shows only one example heterogeneous network and that a plurality of macro cells may be provided, more or less than one small cell may be provided and a plurality of small cell clusters may be provided for example.

Small cell 14 provides local communications coverage for a user in its vicinity. As a user equipment comes within range of the small cell, a handover may occur between the base station 26 of the macro cell and the small cell, such as when the base station of the small cell detects that user equipment has come within range.

In order to handle the capacity needs of a high traffic area, user equipment in the telecommunications network 10 of Figure 1 may be provided with dual connectivity support. That is, a user equipment may be connected to both the macro cell 12 and the small cell 14. Also, it should be appreciated that a user equipment may be dual connected to small cell 14 and any of other small cells that may be provided.

Dual connectivity as described with reference to figure 1 can be used to enable offloading of traffic via small cell when required. For example, a data flow associated with a specific service in use by the user equipment can be offloaded to a small cell in high traffic areas that may otherwise cause the macro cell 12 to become overloaded for example.

Thus, UE 21 can be connected to more than one cell at a time and the UE can therefore be served by more than one cell, which can belong to home cells from different vendors. A small cell need not only serve offloaded traffic for dual connected UEs but can also serve legacy UEs that are directly connected to the small cell. Typically, a UE connected to the network is identified using an identifier such as an allocated Cell Radio Network Temporary Identifier, or C-RNTI, which is allocated to the UE at its initial access to the network, and which can be changed using hand over procedures.
An access network 51 of system 10 includes a home gateway access controller 53 for serving nodes of a first type supporting a mobility process and nodes of a second type that do not support the mobility process for UE 21 of the system. The core network is depicted generally at 52.

A UE can be in any one of a number of states for transmission of data normally determined based on the UE's level of activity. For example, a UE can be in a dedicated channel (Cell_DCH) state. Other states, such as such as CELL_FACH (Forward access channel), CELL_PCH (Cell Paging channel) and URA_PCH (URA Paging channel) can also be used. For example in Cell_FACH, the UE is connected to the network but has low data activity. Mobility according to a mobility process in the Cell_FACH, Cell_PCH & URA_PCH states is supported by using the Cell Reselection procedure.

In Cell Reselection involving small cells, the UE performs measurements of its serving and neighbour small cells to evaluate the best cell to attach to. If a neighbour small cell signal is deemed better than that of the serving cell, the UE will reselect to this neighbour small cell by sending an RRC Cell Update message to this target cell. If the UE is allowed to attach to the target small cell, a Cell Update Confirm message will be sent back to the UE. As part of the Cell Reselection procedure the target small cell will need to retrieve information regarding the UE (i.e. the UE's context) from the source cell to complete the Cell Reselection process. According to an example, there is provided a solution to allow a target small cell to retrieve a UE's context, such as when the source cell is also a small cell, and in the situation when the small cells deployed within a network conform to different standards releases and therefore have different capabilities and functionality for example.

In an example, a UE can perform a cell reselection within a network that has a mixture of small cells (also referred to as home node Bs, nodes, or HNBs) deployed that conform to different releases of a standard and some conforming to an earlier release (termed legacy HNBs herein) for example. That is, some HNBs can support reselection for Cell_FACH/Cell_PCH/URA_PCH mobility (using a mobility process) and some (legacy nodes) may not (such that they support a different mobility process, or such that they do not support a mobility process for example). Legacy HNBs allocate UTRAN Radio Network Temporary Identifiers (URNTIs) to UEs autonomously, without reference to the HNB-GW, whereas a HNB-GW (gateway) can provide a degree of control of how URNTIs are allocated to UEs by the HNBs conforming to a newer standard (non-legacy HNBs).

For example, a HNB-GW can provide non-legacy HNBs with a Serving Radio Network Temporary Identifier (SRNTI) prefix value, which the HNBs can then use to encode part of the URNTIs allocated to UEs as those UEs attach to said HNBs in order to support Cell_FACH mobility for example.

A UE's URNTI is an important identifier, since when a UE performs a Cell Reselection to another HNB (the target HNB) the URNTI is used by the target HNB to try and identify the source cell and hence the cell from where it can retrieve the UE's context information. In a network with mixed releases of HNBs the target HNB cannot distinguish between those source HNBs that support the SRNTI prefix allocation scheme and legacy HNBs that do not support that scheme and instead allocate URNTIs autonomously. This can therefore lead to the situation whereby a legacy HNB allocates the same URNTI to a UE that is also allocated to another UE by an HNB that supports a Cell_FACH mobility feature. In a worse case, this can lead to a scenario whereby the target HNB of a Cell Reselection procedure uses the URNTI received from the UE in the RRC Cell Update message to incorrectly identify the UE. This therefore can lead to the target HNB requesting the relocation of the wrong UE context from another HNB, which can in turn mean that the incorrectly identified UE's connection is dropped by the network. Thus the actions of one UE (by performing a Cell Reselection) can result in another UE's connection being impacted.

In an example, when a UE is in one of the Cell_FACH, Cell_PCH or URA_PCH states and moves from one cell to another it performs a Cell Reselection procedure. This involves the UE taking measurements of its serving and neighbour cells to evaluate the best cell to attach to. If a neighbour cell signal is deemed better than that of the serving cell, the UE will reselect to this neighbour cell. It is important to note that Cell Reselection is performed by the UE, that is, the UE decides (based on its measurements) which cell to attach to. For the Cell Reselection procedure, once the UE has determined a target neighbour cell to reselect to, it will send an RRC Cell Update message to this target cell. If this UE is allowed to attach to the target cell, an RRC Cell Update Confirm message will be sent back to the UE. Since the UE decides when to perform a Cell Reselection procedure, the network is unaware of the UE reselection decisions until it receives an RRC Cell Update message from the UE.

When HNBs are deployed they are connected to the rest of an operator's network via an HNB-GW. In the case of handling Cell_FACH mobility, the HNB-GW is responsible for providing an S-RNTI prefix to each non-legacy HNB that registers with the HNB-GW. The prefix is then subsequently used by the HNB to allocate URNTIs to UEs as they attach to the HNB. Thereby, the HNB-GW can manage the allocation of SRNTI prefixes to HNBs to ensure that when a UE subsequently performs a Cell Reselection to another HNB (a target HNB), the UE's URNTI can be used to uniquely identify the source HNB and hence allow the target HNB to retrieve the UE's context information from said source HNB.

In an example, a radio network controller (RNC) is configured to support more than one RNC-ID. In an HNB deployment, the HNB-GW supports part of the RNC functionality and when an HNB registers with the HNB-GW, the GW provides the HNB with the RNC-ID that the HNB should subsequently use for various procedures. In an example, the HNB-GW is considered as a large RNC and is allocated at least 2 RNC IDs. The HNB-GW implements a mechanism to provide different RNC-IDs to HNBs that register with it depending on whether the HNB does, or does not support a Cell_FACH mobility feature - that is, whether the HNB is a legacy or non-legacy HNB.

It is possible for a HNB to provide an indication to the HNB-GW whether it supports the Cell_FACH mobility feature. Therefore the HNB-GW can implement new logic that differentiates between legacy and non-legacy HNBs, and hence the HNB-GW is able to provide different RNC-IDs to a legacy HNB and a non-legacy HNB.

As the RNC-ID is embedded in the UE's URNTI, the HNB will use the HNB-GW provided RNC-ID to encode each URNTI allocated to a UE. Therefore when a UE subsequently performs a Cell Reselection to another HNB (a target HNB), the target HNB will, in conjunction with the HNB-GW, be able to determine whether the UE has performed a Reselection from an HNB that supports the Cell_FACH mobility feature by using the RNC-ID portion of the URNTI provided by the UE during the Cell Reselection procedure. This means that the target HNB will be able to retrieve a UE's context from an HNB that supports the Cell_FACH mobility feature, since the HNB-GW will provide the target HNB with the transport address information of the correct source HNB, which the HNB-GW is able to uniquely identify given the UE's URNTI and the HNB-GW's knowledge of the allocation of SRNTI prefixes across non-legacy HNBs.

In addition, the target HNB will also be provided within an indication from the HNB-GW if the UE's URNTI has been allocated by an HNB that does not support the Cell_FACH mobility feature (a legacy HNB) and hence the target HNB can in that case determine that retrieving the UE's context may not be viable, since there is a risk that the wrong UE context is identified, given that legacy HNBs autonomously allocate UE URNTIs and hence a clash of URNTIs is possible. In an example, the target HNB may release the UE's connection and the UE can then establish a new RRC connection with the target HNB, which will then allocate a new URNTI to said UE.

In another embodiment, the HNB-GW can be configured with a multiplicity of RNC-IDs and can in turn allocate one RNC-ID value to non-legacy HNBs and can allocate an RNC-ID from a selected range of separate RNC-IDs to different legacy HNBs depending on where the said legacy HNBs are physically deployed. Hence by ensuring that neighbouring legacy HNBs are allocated separate RNC-IDs it would be possible for the target HNB of a Cell Reselection procedure to use the HNB-GW to identify the correct source legacy HNB, based on the location of the target HNB and the RNC-ID embedded in the UE's URNTI. As the absolute number of RNC-IDs that can be configured on any one HNB-GW is limited, the HNB-GW can implement a mechanism to reuse RNC-ID values across HNBs that are geographically dispersed and hence would be unlikely to host UEs that can perform a Cell Reselection to the same target HNB. This means that by allocating a small number of RNC-IDs to different legacy HNBs the HNB-GW can help the target HNB in retrieving UE contexts from both legacy non-legacy HNBs, which would remove the need for a target HNB to release an RRC connection from a UE that had its URNTI allocated by a legacy HNB.

In another embodiment, the above-described process for uniquely identifying legacy HNBs can be reused for non-legacy HNBs that support the Cell_FACH mobility feature. In an example, this means that such HNBs are not just identified by the SRNTI prefix contained in the URNTI provided to the target HNB during a Cell Reselection procedure, but by a combination of both the RNC ID and the SRNTI prefix received in the URNTI.

Thus such a combination provides a unique identification of the HNB within the network. This can be extended, such that a process is implemented whereby an HNB that supports the Cell_Fach mobility feature can be uniquely identified by the RNC ID allocated to it by the HNB-GW, without considering the SRNTI prefix, in the same way as a legacy HNB would be.

In another embodiment, the HNB-GW can be configured with more than one RNC-ID and allocates one of these RNC-IDs to a specific group of HNBs. However the macro network is configured such that it is only aware that the HNB-GW supports a single RNC-ID, which is different to that allocated to this specific group of HNBs. This therefore effectively isolates that group of HNBs and prevents hand-in from the macro network. This can be beneficial if this specific group of HNBs support open/hybrid mode and have limited resources, e.g. if they are only deployed for local use and not to fill in holes in the macro network coverage for example. Therefore by preventing hand-in from the macro network, the said group of HNBs are not liable to be overloaded or otherwise discovered. A specific group of HNBs could be identified by configuration information on the HNB-GW, or alternatively the HNB-GW could determine said group by using information provided by the HNBs (e.g. access mode supported, HNB Capacity) when they register with the HNB-GW.

In another embodiment, a combination of the embodiments and examples described above can be used within the same network such that some legacy HNBs are allocated a common generic RNC-ID which means that whilst they can be identified as legacy HNBs, they cannot be individually identified. Whereas other legacy HNBs are allocated specific unique RNC IDs by the HNB GW, accounting for the location of other HNBs within the neighbourhood, which allows those HNBs to be uniquely identified.

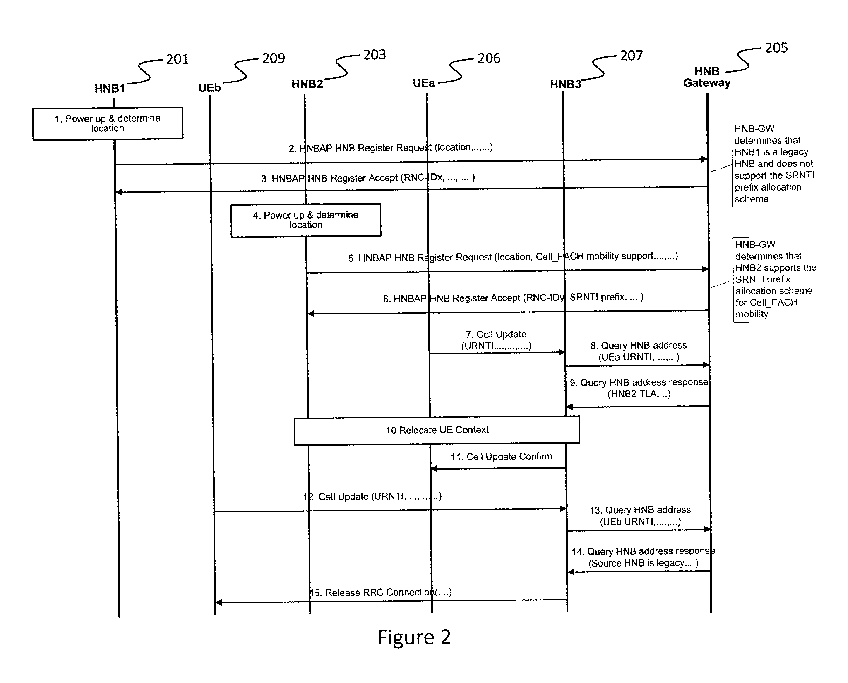

Figure 2 is a schematic representation of a process in which two HNBs are deployed, one (201) that does not support the Cell_FACH mobility feature (SRNTI prefix allocation) and one (203) that does support the Cell_FACH mobility feature. The HNB-GW (205) has been configured as a Large RNC and hence in this example supports two RNC-IDs (RNC-IDx & RNC-IDy).

With reference to figure 2, the following steps occur:
1) HNB1 is deployed by an end user, it boots and determines its location;
2) HNB1 then registers with the HNB-GW, since HNB1 is a legacy HNB it does not provide an indication that it supports the Cell_FACH mobility feature to the HNB-GW;
3) The HNB-GW determines that HNB1 does not support the Cell_FACH mobility feature, due to the absence of the relevant indication in the HNBAP Register Request message and therefore the HNB-GW accepts the registration and provides HNB1 with RNC-IDx in the HNBAP Register Accept message;
4) A second small cell (HNB2) is deployed by another end user; it boots and determines its location;
5) HNB2 then registers with the HNB-GW since HNB2 supports the Cell_FACH mobility feature it indicates this to the HNB-GW in the HNBAP HNB Register Request message;
6) The HNB-GW determines that HNB2 supports the Cell_FACH mobility feature due to the presence of the related indication and therefore allocates RNC-IDy to HNB2 and also provides HNB2 with an SRNTI prefix in the HNBAP Register Accept message;
7) UEa (206) attached to HNB2 is in Cell_FACH and performs a Cell Reselection to HNB3 (207), as part of the RRC Cell Update message sent to HNB3, UEa includes its URNTI, in which is embedded RNC-IDy;
8) HNB3 does not have an Iurh interface established to HNB2, so it queries the HNB-GW to find the source HNB;
9) The HNB-GW recognizes that the source HNB (HNB2) is configured to support SRNTI prefixes (due to the presence of RNC-IDy in UEa's URNTI). It therefore returns HNB2's transport layer information to HNB3;
10) HNB3 establishes an Iurh connection to HNB2 and retrieves UEa's context;
11) HNB3 confirms the Cell Reselection to UEa;
12) UEb (209) attached to HNB1 is also in Cell_FACH and performs a Cell Reselection to HNB3, as part of the RRC Cell Update message sent to HNB3, UEb includes its URNTI, in which is embedded RNC-IDx;
13) HNB3 does not have an Iurh interface established to HNB1, so it queries the HNB-GW to find the source HNB;
14) The HNB-GW recognizes that the source HNB (HNB1) is not configured to support the Cell_FACH mobility feature (due to the presence of RNC-IDx in the UE's URNTI). It therefore returns an indication to HNB3 that the source HNB is a legacy HNB;
15) Since legacy HNBs autonomously allocate URNTIs to UEs, HNB3 determines that it is unsafe to try and retrieve UEb's context and hence it releases UEb's RRC connection. Subsequently UEb will establish a new RRC connection with HNB3.

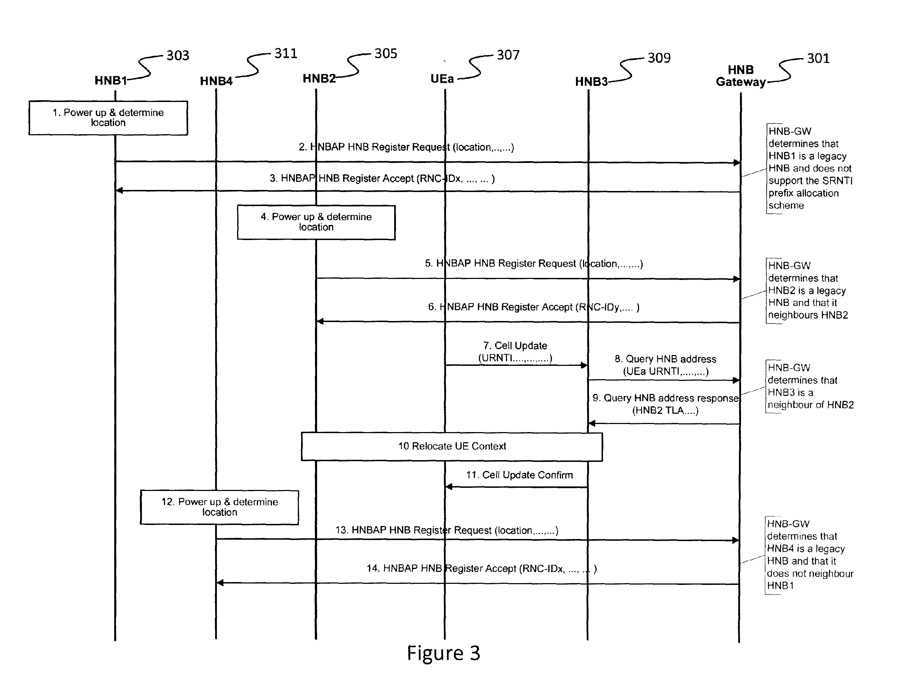

Figure 3 is a schematic representation of a process in which two HNBs are deployed, neither supporting the Cell_FACH mobility feature (SRNTI prefix allocation). The HNB-GW (301) is been configured as a Large RNC and hence in this example supports multiple RNC-IDs (RNC-IDx, RNC-IDy,......).

The following steps occur:
1) HNB1 (303) is deployed by an end user; it boots and determines its location;
2) HNB1 then registers with the HNB-GW, since HNB1 is a legacy HNB it does not provide an indication that it supports the Cell_FACH mobility feature to the HNB-GW;
3) The HNB-GW determines that HNB1 does not support the Cell_FACH mobility feature, due to the absence of the relevant indication in the HNBAP Register Request message and therefore the HNB-GW accepts the HNB registration and provides HNB1 with RNC-IDx in the HNBAP Register Accept message;
4) A second small cell (HNB2, 305) is deployed by another end user; it boots and determines its location;
5) HNB2 then registers with the HNB-GW, since HNB2 is a legacy HNB it does not provide an indication that it supports the Cell_FACH mobility feature to the HNB-GW;
6) The HNB-GW determines that HNB2 does not support the Cell_FACH mobility feature, due to the absence of the relevant indication in the HNBAP Register Request message. The HNB-GW uses the provided information on the location of HNB2 to determine that HNB2 is a neighbour of HNB1 and hence as part of accepting the HNB registration the HNB-GW provides HNB2 with RNC-IDy in the HNBAP Register Accept message;
7) UEa (307) attached to HNB2 is in Cell_FACH and performs a Cell Reselection to HNB3 (309), as part of the RRC Cell Update message sent to HNB3, UEa includes its URNTI, in which is embedded RNC-IDy;
8) HNB3 does not have an Iurh interface established to HNB2, so it queries the HNB-GW to find the source HNB;
9) The HNB-GW recognizes that the source HNB (HNB2) is a legacy HNB, due to the presence of RNC-IDy in the UE's URNTI. The HNB-GW also knows where HNB3 is located (since HNB3 previously provided this information when it registered with the HNB-GW), hence the HNB-GW is able to correctly identify HNB2 as the source HNB, since its location is close to HNB3's (e.g. HNB2 is a neighbouring cell of HNB3). Therefore the HNB-GW returns HNB2's transport layer information to HNB3;
10) HNB3 establishes an Iurh connection to HNB2 and retrieves UEa's context;
11) HNB3 confirms the Cell Reselection to UEa;
12) HNB4 (311) is deployed by an end user; it boots and determines its location;
13) HNB4 then registers with the HNB-GW, since HNB4 is a legacy HNB it does not provide an indication that it supports the Cell_FACH mobility feature to the HNB-GW;
14) The HNB-GW determines that HNB4 does not support the Cell_FACH mobility feature, due to the absence of the relevant indication in the HNBAP Register Request message. The HNB-GW uses the provided information on the location of HNB4 to determine that HNB4 is not a neighbour of HNB1 and hence as part of accepting the HNB registration the HNB-GW provides HNB4 with RNC-IDx in the HNBAP Register Accept message. Hence the HNB-GW reuses an RNC-IDx across HNBs that are geographically disjoint from each other.

Support for Cell_FACH/Cell_PCH/URA_PCH mobility for UEs within a network that has UMTS HNBs deployed that conform to different standards versions is therefore provided. Some HNBs can support a Cell_FACH mobility feature, whilst other HNBs deployed within the network need not. An HNB that is the target of a UE Cell Reselection procedure is therefore able to retrieve the relocated UE's context from both types of HNB - those that support a Cell_FACH mobility feature and those that do not thereby improving performance of the network. In an example, an HNB-GW is configured as a large RNC. That is, the HNB-GW is configured to support more than one RNC-ID.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a cellular radio-communication system comprising a core network and an access network, the access network including a home gateway access controller for serving nodes of a first type supporting a mobility process and nodes of a second type that do not support the mobility process for UE of the system, the method comprising:
receiving, at the home gateway access controller, a registration request from a node to register with the home gateway access controller;
determining, at the home gateway access controller, whether the content of the registration request includes an indication that the node supports the mobility process;
on the basis of the determination, allocating an identifier to the node for the access network representing whether the node can operate under the mobility process or not.

2. A method as claimed in claim 1, wherein the UE is operable to perform a node reselection procedure to connect with a target node of the access network from a host node, including:
determining, at the home gateway access controller using the identifier, whether the host node supports the mobility process.

3. A method as claimed in claim 2, further including:
providing context data for the UE from the host node to the target node on the basis of the determination of the mobility process supported by the host node.

4. A method as claimed in claim 2 or 3, wherein using the identifier includes determining an RNC identification for the host node using a URNTI allocated to the UE.

5. A method as claimed in claim 2, further including:
releasing the UE's connection with the target node; and
establishing a new RRC connection with the target node including allocating a new URNTI to the UE.

6. A radio telecommunication system (10) comprising:
a core network (52);
an access network (51) including a home gateway access controller (53) to serve nodes of a first type supporting a mobility process and nodes of a second type that do not support the mobility process for UE of the system, the system operable to:
receive, at the home gateway access controller, a registration request from a node to register with the home gateway access controller;
determine, at the home gateway access controller, whether the content of the registration request includes an indication that the node supports the mobility process;
on the basis of the determination, allocate an identifier to the node for the access network representing whether the node can operate under the mobility process or not.

7. A system as claimed in claim 6, wherein the UE is operable to perform a node reselection procedure to connect with a target node of the access network from a host node, the home gateway access controller operable to determine using the identifier, whether the host node supports the mobility process.

8. A system as claimed in claim 7, wherein the host node is operable to provide context data for the UE to the target node on the basis of the determination of the mobility process supported by the host node.

9. A system as claimed in claim 7 or 8, the system operable to determine an RNC identification for the host node using a URNTI allocated to the UE.

10. A system as claimed in claim 7, further operable to:
release the UE's connection with the target node; and
establish a new RRC connection with the target node and allocate a new URNTI to the UE.

11. A home gateway access controller (53) of a heterogeneous telecommunications system (10) operable to: receive a registration request from a node (14) of the system to register with the home gateway access controller (53);
determine whether the content of the registration request includes an indication that the node supports a predefined mobility process; and
allocate, on the basis of the determination, an identifier to the node representing whether the node can operate under the mobility process or not.

12. A home gateway access controller (53) of a heterogeneous telecommunications system configured as a large RNC.

13. A home gateway access controller (53) of a heterogeneous telecommunications system as claimed in claim 11 or 12 configured to support more than one RNC-ID.

14. A UE (21) operable in accordance with the method as claimed in any of claims 1 to 5.

15. A computer program product, comprising a computer usable medium having computer readable program code embodied therein, said computer readable program code adapted to be executed to implement a method, in a radio communication system, as claimed in any of claims 1 to 5.
